# EUROPEAN PATENT SPECIFICATION

(11) **EP 3 670 392 B1**
(45) Date of publication and mention of the grant of the patent: **14.08.2024**
(21) Application number: 18382983.7
(22) Date of filing: 21.12.2018
(51) Int. Cl.: B65G 17/08, B65G 43/02

(54) **CONVEYOR BELTS WITH A SYSTEM FOR ELONGATION CONTROL**
FÖRDERBÄNDER MIT EINEM SYSTEM ZUR DEHNUNGSSTEUERUNG
BANDES TRANSPORTEUSES COMPRENANT UN SYSTÈME DE COMMANDE D'ALLONGEMENT

(43) Date of publication of application: 24.06.2020
(73) Proprietor: Afher Eurobelt, S.A., 47012 Valladolid (ES)
(72) Inventor: SAN MIGUEL NUÑEZ, Javier, 17012 VALLADOLID (ES)
(74) Representative: Temiño Ceniceros, Ignacio

(56) References cited:
- EP-A1- 1 440 921
- WO-A1-2012/102857
- JP-A- 2018 047 973
- US-A- 4 020 945
- US-A- 4 106 005
- US-A1- 2006 219 528

## Description

The object of the present invention is to provide a system and a method for counteracting elongation in conveyor belts by means of generating magnetic attractive forces between a plurality of consecutive pitches thereof. Conveyor belt is understood to mean any conveyor belt known in the state of the art, whether said belt is of the type formed by modules or links attached to one another or a continuous belt of any material, such as polyurethane for example.

### TECHNICAL FIELD OF THE INVENTION

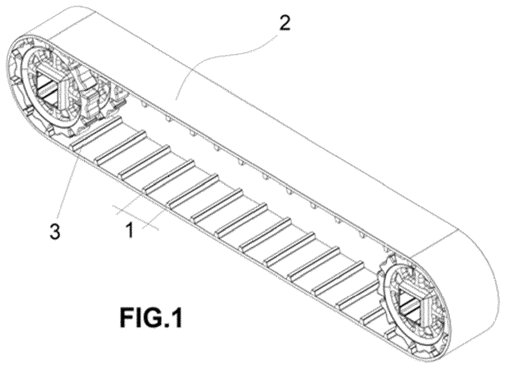

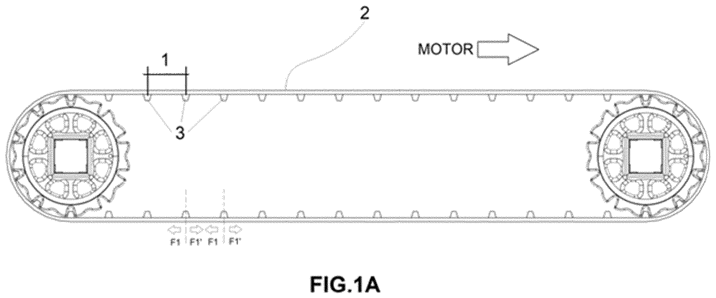

The present invention generally relates to motor-driven conveyor belts, as shown in Figure 1, or to those referred to as flat belts with positive drive, usually manufactured in polyurethane, or plastic modular belts, manufactured with different technical plastics according to the application to which they will be subjected.

### PRIOR STATE OF THE ART

In all conveyance systems, stretching or elongation of the support or conveyor belt occurs when it is pulled on and tensed by drive means, generally systems with gear rings either driven by belt drives or by one or more gears moved by a motor.

In conveyor belts which are driven by means of these drive systems, the moment in which the motor starts to work, a force is exerted which *pulls* on them, generating the movement thereof. Furthermore, since they are usually manufactured in plastic, and therefore elastic materials, it is then in that moment and during the operation thereof when stretching or elongation of the belt, which must be minimized and controlled, occurs.

Therefore, with conveyor belt elongation, the pitch of the belt is modified as it must withstand stress in order to overcome that mass or load during movement, which can be critical since if it is excessive, when the teeth of the gear are going to drive said belt, they will not act or engage in the correct position within the module or already "stretched" rib, being able to become disengaged and damage the belt and its gears.

The present invention proposes the control and actuation thereof on elongation by magnetic means or elements manufactured and/or inserted in the conveyor belt itself or in the modules forming it, according to the preamble of claim 1.

The use of magnetic forces in conveyor belts is already known, for example, in patent documents WO2012/102857 and WO2016/060818. Document WO2012/102857 discloses a conveyor belt with a system for elongation control according to the preamble of independent claim 1.

On the other hand, patent document WO2015048642 describes a magnetic conveyor belt module integrating a magnetic element in the body of the module to attract conveyed articles to the body. The magnetic conveyor belt module includes a recess for seating a magnetic element and a retention element for retaining a magnetic element within the recess. A cover encapsulates the magnetic element within the body of the module. Nevertheless, the manner in which the magnetic elements are placed in the modules is not object of the present invention, but the purpose and the use thereof are.

Patent document WO2012/102857 describes a conveyor belt and a module with magnets describing a conveyor belt with a modular turning radius having a magnetic material in adjacent belt rows, including magnets in selected rows of the belt modules. The magnets in a row of the belt attract the magnets or the paramagnetic material in adjacent rows to prevent vibration between rows which could shake a conveyed article out of its preferred position or orientation on the conveyor belt. It is therefore a passive system which, through the attractive magnetic force between consecutive magnets in the modules of the conveyor belt, prevents the vibrations of the belt so that the conveyed products *sustain* the least vibrations possible during conveyance.

On the other hand, patent document WO2016/060818 describes a conveyor for curved areas comprising a side-flexing conveyor belt and a touchless magnetic linear guide at the inside of a turn. The conveyor belt has electrically conductive elements on a side edge. An array of permanent magnets along the side rail of the conveyor at the inside of a turn produces a permanent magnetic field. At the same time the conveyor belt is driven through the turn, the permanent magnetic field induces currents in the electrically conductive material. The currents produce reactive magnetic fields opposing the permanent magnetic field, resulting in an outward radial force which pushes the conveyor belt, moving it away from frictional contact with the side rail. As an alternative, a magnetic linear guide with permanent magnets is provided at the side edge of the belt and electrically conductive elements at the side rail of the conveyor. Nevertheless, in this second case, the system is also a passive system which does not impose any control whatsoever on the magnetic forces generated in the conveyor belt.

Both patent documents WO2012/102857 and WO2016/060818 use magnetic elements, but neither of them contemplates the use thereof for regulating elongation of the conveyor belt, counteracting it, and thereby increasing its durability. Therefore, it is desirable, based on the incorporation of magnets and magnetic forces in the conveyor belts, to establish control of such conveyor belts in order to regulate their elongation and proper operation.

The document US 2006/219528 A1 discloses methods and devices for measuring elongation, wear, and internal temperature of a conveyor belt to catch signs of conveyor belt failure such as breakage by detecting a magnetic field from a magnetic body by using a magnesium sensor, as well as a rubber magnet sheet as a magnetic body and a method of producing the sheet, the rubber magnet sheet being able to be used while it is embedded in the conveyor belt. To measure elongation of a running conveyor belt, a magnetic field of a magnetic body embedded in the belt is detected by a magnetism sensor fixed to the earth, and elongation of the belt is calculated from temporal variation of the detected magnetic field.

### SUMMARY OF THE INVENTION

An object of the invention relates to conveyor belts with a system for elongation control, whether said belts are modular or continuous which, based on the generation of magnetic attractive forces between consecutive "pitches" of the conveyor belt, help to counteract this elongation, prolonging the service life thereof and facilitating the conveyance of heavier loads, for which purpose *active* control of the mentioned magnetic forces must be implemented, compared to systems known in the state of the art which use *passive* systems, i.e., without control of the generated magnetic forces, and furthermore for uses other than the control of elongation, such as the elimination of vibrations and friction at curves.

"Pitches" are understood to mean the series of equidistant points of the conveyor belt the measurement of which usually coincides with the area where the gear teeth will drive, both in modular belts and in continuous belts.

The object of the present invention is achieved by means of the conveyor belt with an elongation control system described in claim 1 and with the method of claim 5. The particular embodiments of the invention are described in the claims depending on the former.

More specifically, the system for elongation control in conveyor belts, where said conveyor belt houses at least one magnetic element in one and the same position, at an identical separation or distance, which is equal to the pitch of the conveyor belt and characterized in that it comprises means configured for varying the magnetic field induced by each magnetic element, said magnetic field being induced such that the magnetic elements between adjacent pitches of the conveyor belt are attracted to one another.

In another aspect of the invention, the method for elongation control in conveyor belts object of the present invention comprises inserting in a conveyor belt a magnetic element, in one and the same position, at an identical separation or distance which is equal to the pitch of the conveyor belt; detecting an elongation between two pitches of the conveyor belt; and generating a magnetic field with the magnetic elements, wherein said generated magnetic field is configured for attracting two magnetic elements between adjacent pitches of the conveyor belt to one another until the elongation is less than a previously established threshold.

Throughout the description and claims, the word "comprises" and its variants does not seek to exclude other technical features, additions, components, or steps. For those skilled in the art, other objects, advantages, and features of the invention will be inferred in part from the invention and in part from putting the invention into practice. The following examples and drawings are provided by way of illustration and do not seek to restrict the present invention. Furthermore, the invention covers all the possible combinations of particular and preferred embodiments herein indicated.

### BRIEF DESCRIPTION OF THE DRAWINGS

A series of drawings which help to better understand the invention and expressly relate to an embodiment of said invention, illustrated as a non-limiting example thereof, are very briefly described below.
Figure 1 shows a first practical embodiment of the system for control object of the present invention, in an isometric view (Figure 1) and front view (1a).

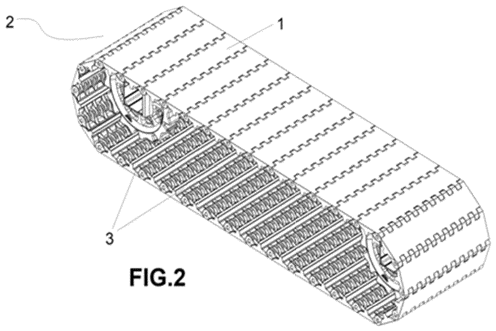

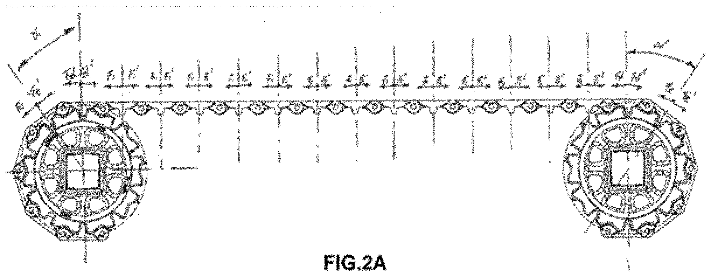

Figure 2 shows a second practical embodiment of the system for control object of the present invention, in an isometric view (Figure 2) and front view (2a).

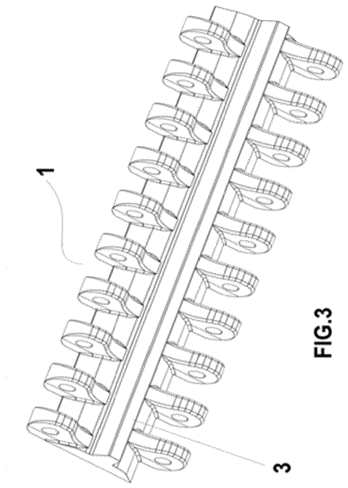

Figure 3 shows a link of the second practical embodiment of the system shown in Figure 2.
Figure 4 shows a third practical embodiment of the system for control object of the present invention.
Figure 5 shows a fourth practical embodiment of the system for control object of the present invention.
Figure 6 shows a detail view of a link of the conveyor belt shown in Figure 5.

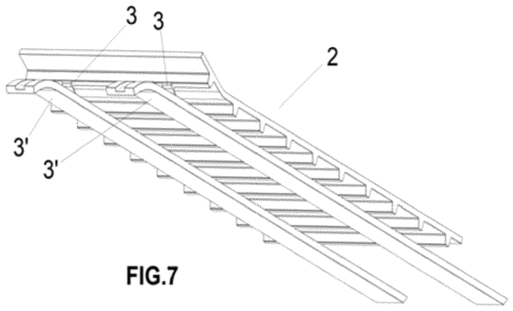

Figure 7 shows a fifth practical embodiment of the system for control object of the present invention.

### DETAILED DESCRIPTION OF AN EMBODIMENT OF THE INVENTION

As can be seen in the attached drawings, a magnetic element (3) is inserted in each module or pitch (1) of the conveyor belt (2), in one and the same position, at an identical separation or distance (d) which is equal to the pitch of the conveyor belt (2).

The magnetic system of each module or pitch will generate attractive forces F1 and F1' with those consecutive therewith, with the possible stretching or elongation produced in each module or pitch when the drive force is actuated from the motor being compensated. In other words, that driving force will have to overcome those attractive magnetic forces so as to deform or modify the pitch, since those forces produced therebetween will help them to maintain same, increasing the capacity and strength of the belt. Therefore, attractive forces are produced between opposite poles which will counteract the force causing the belt to stretch or deform, i.e., the force of the assembly generated by the motor and required for moving the load to be conveyed.

On the other hand, the magnetic induction will have to reach the first pitch already meshed or engaged on each side, i.e., from the sliding surface to the conveyor belt, specifically where the magnetic elements (3) are inserted, all so that the system of attraction works or acts in all the modules or pitches which are located between gears and so that said module or pitch which is ready to mesh is not subjected to all the stress when the balance is disrupted. (Fd-Fd' and Fc-Fc')

To avoid this problem, the invention allows controlling magnetic forces so that they increase or decrease depending on the stress to which the modules or pitches are going to be subjected, i.e., the load together with its sliding coefficients to be conveyed. So where there is a rather insignificant load to be conveyed, or in other words little elongation or modification of the pitch, it means that very small magnetic forces are required, and depending on the increase in the load to be conveyed, which will translate into an increase in elongation and pitch, larger magnetic forces are required.

To achieve the desired effect, it is necessary to use magnetic elements (3) in which said continuous magnetic field, and thereby the attractive force between magnetic elements (3), can be varied. For example, it is possible to use electromagnets to increase or decrease the attractive force between magnetic elements by varying the current circulating through them.

Therefore, the present invention comprises means for increasing or decreasing the magnetic field generated by the magnetic elements, such that it is possible to vary the magnetic field created by the magnetic elements (3) depending on the force to be counteracted. It is thus possible to generate a magnetic field of greater or lesser intensity, for example, from the conveyor belt sliding or contact surface, which will always induce those magnetic elements with the intensity desired and in real time. This practical embodiment is touchless, i.e., a variable magnetic field is generated from, for example, the sliding surface, which in turn modifies the field generated from the magnetic elements.

If the conveyor belt is not touchless, it is not necessary to generate a magnetic field, since given that there is contact, a current is circulated through a plurality of, by way of non-limiting example, electromagnets, without it being necessary to induce a magnetic field.

These magnetic elements (3), for example, electromagnets, will generate a positive pole and another negative pole which, always placed and oriented in the same position in the modules, will cause the attractive forces proposed by the invention.

Therefore, those electromagnets or magnetic elements (3) will have to be induced, for example, from their sliding surface.

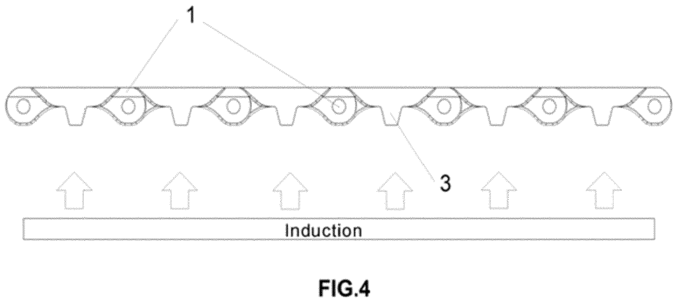

One way could be by induction at the same time of another electromagnet embedded in said sliding surface, so that by acting on the current or intensity thereof, it transmits a higher or lower current to the magnetic elements (3) and these elements generate larger or smaller forces depending on the forces that must be counteracted in order to eliminate or reduce elongation between consecutive pitches (Figure 4).

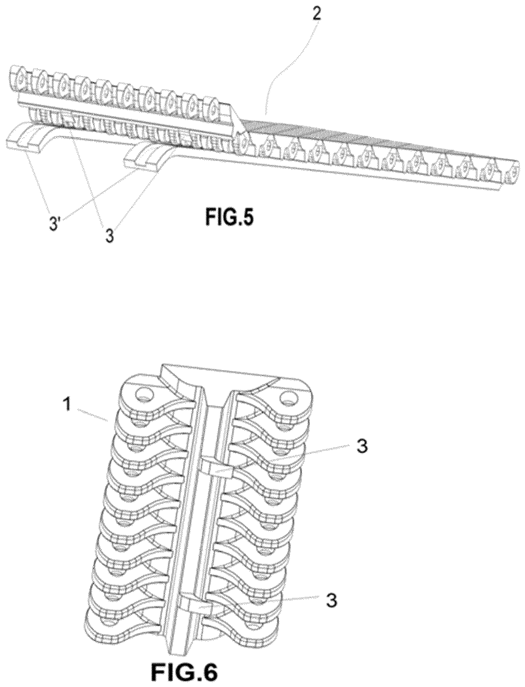

Another way to transmit or induce that field for generating the corresponding attractive magnetic fields in the magnetic elements (3) could be by direct contact on, for example, lower rails (3'), as can be seen in Figure 5.

By acting on these rails, the current or intensity transmitted to the magnetic elements (3) placed in each of the pitches or modules of the conveyor belt can be modified, so as to increase or decrease in that manner the attractive forces between them and to counteract the effects of elongation.

The present invention, together with an elongation detection system such as the one described in EP18382131.3, will allow controlling the pitch of the belt and modifying it, providing more or less attractive force to the magnetic systems of each of the modules, to thereby control and counteract in an intelligent manner the pitch of the belt and increase the strength of the belt virtually at will, in an intelligent manner, and completely online.

## Claims

1. A conveyor belt (2) with a system for elongation control wherein said conveyor belt (2) comprises a plurality of pitches wherein at least one magnetic element (3) is housed in the belt and inserted between each adjacent pitches in one and the same position, at an identical separation or distance (d) which is equal to the distance between two adjacent pitches of the conveyor belt (2);
and **characterized in that** the conveyor belt (2) further comprises:
means for detecting an elongation between two pitches (1) of the conveyor belt (2); and
means configured for varying the magnetic field generated by each of the at least one magnetic element (3), said magnetic field being generated such that the at least one magnetic elements (3) between adjacent pitches (1) of the conveyor belt (2) are attracted to one another; until the elongation is less than a previously established threshold.

2. The conveyor belt with a system for elongation control according to claim 1, wherein the at least one magnetic elements (3) are electromagnets configured for generating a positive pole and another negative pole which, always placed and oriented in the same position within the conveyor belt (2), generate a magnetic field in connection with the elongation detected between adjacent pitches (1) of the conveyor belt (2)

3. The conveyor belt with a system for elongation control according to claim 1, comprising an induction system inducing, in a contact-free manner, a magnetic field in the at least one magnetic elements (3)

4. The conveyor belt with a system for elongation control according to claim 1, comprising a lower rail (3') inducing an electric current in the at least one magnetic elements (3) configured for generating a magnetic field proportional to the induced electric current.

5. A method for elongation control in conveyor belts, which is carried out in a conveyor belt with a system for elongation control according to one of claims 1 to 4 and comprising the steps of:
inserting between each adjacent pitches the at least one magnetic element (3) in the conveyor belt (2), in one and the same position, at an identical separation or distance (d) which is equal to the pitch (1) of the conveyor belt (2);
detecting an elongation between two pitches (1) of the conveyor belt (2);
generating a magnetic field in the at least one magnetic elements (3) wherein said generated magnetic field is configured for attracting the at least one magnetic elements (3) between adjacent pitches of the conveyor belt (2) to one another until the elongation is less than a previously established threshold.

6. The method for control according to claim 5, which comprises always placing and orienting in the same position within the conveyor belt (2) the at least one magnetic elements (3) configured for generating a positive pole and another negative pole which induce a magnetic field in connection with the elongation detected between adjacent pitches (1) of the conveyor belt (2).

7. The method for control according to claim 5, which comprises inducing an electric current in the at least one magnetic elements (3) through contact with a lower rail (3'), such that a magnetic field proportional to the induced electric current is generated.

## Patentansprüche

1. Förderband (2) mit einem System zur Dehnungssteuerung, wobei das Förderband (2) eine Vielzahl von Teilungen umfasst, wobei mindestens ein magnetisches Element (3) in dem Band untergebracht ist und zwischen jeweils benachbarten Teilungen in ein und derselben Position mit einer identischen Trennung oder einem identischen Abstand (d) eingesteckt ist, der gleich dem Abstand zwischen zwei benachbarten Teilungen des Förderbandes (2) ist;
und **dadurch gekennzeichnet, dass** das Förderband (2) ferner Folgendes umfasst:
Mittel zum Erfassen einer Dehnung zwischen zwei Teilungen (1) des Förderbandes (2); und
Mittel, die zum Verändern des durch jedes der mindestens einen magnetischen Elemente (3) erzeugten Magnetfeldes konfiguriert sind, wobei das Magnetfeld derart erzeugt wird, dass die mindestens einen magnetischen Elemente (3) zwischen benachbarten Teilungen (1) des Förderbandes (2) zueinander hingezogen werden; bis die Dehnung kleiner als ein zuvor festgelegter Schwellenwert ist.

2. Förderband mit einem System zur Dehnungssteuerung gemäß Anspruch 1, wobei die mindestens einen magnetischen Elemente (3) Elektromagnete sind, die zum Erzeugen eines positiven Pols und eines anderen negativen Pols konfiguriert sind, die, immer in der gleichen Position innerhalb des Förderbandes (2) platziert und ausgerichtet, ein Magnetfeld in Verbindung mit der zwischen benachbarten Teilungen (1) des Förderbandes (2) erfassten Dehnung erzeugen.

3. Förderband mit einem System zur Dehnungssteuerung gemäß Anspruch 1, umfassend ein Induktionssystem, das berührungslos ein Magnetfeld in dem mindestens einen Magnetelement (3) induziert.

4. Förderband mit einem System zur Dehnungssteuerung gemäß Anspruch 1, das eine untere Schiene (3') umfasst, die einen elektrischen Strom in dem mindestens einen magnetischen Element (3) induziert, das zum Erzeugen eines zu dem induzierten elektrischen Strom proportionalen Magnetfeldes konfiguriert ist.

5. Verfahren zur Dehnungssteuerung in Förderbändern, das in einem Förderband mit einem System zur Dehnungssteuerung gemäß einem der Ansprüche 1 bis 4 durchgeführt wird und die folgenden Schritte umfasst:
Einstecken des mindestens einen magnetischen Elements (3) in das Förderband (2) zwischen jeweils benachbarten Teilungen in ein und derselben Position mit einer identischen Trennung oder einem identischen Abstand (d), die gleich der Teilung (1) des Förderbandes (2) ist;
Erfassen einer Dehnung zwischen zwei Teilungen (1) des Förderbandes (2);
Erzeugen eines Magnetfeldes in den mindestens einen magnetischen Elementen (3), wobei das erzeugte Magnetfeld zum Hinziehen der mindestens einen magnetischen Elemente (3) zwischen benachbarten Teilungen des Förderbandes (2) zueinander konfiguriert ist, bis die Dehnung kleiner als ein zuvor festgelegter Schwellenwert ist.

6. Verfahren zur Steuerung gemäß Anspruch 5, umfassend Platzieren und Ausrichten der mindestens einen magnetischen Elemente (3), die zum Erzeugen eines positiven Pols und eines anderen negativen Pols konfiguriert sind, die ein Magnetfeld in Verbindung mit der zwischen benachbarten Teilungen (1) des Förderbandes (2) erfassten Dehnung induzieren, immer in der gleichen Position innerhalb des Förderbandes (2).

7. Verfahren zur Steuerung gemäß Anspruch 5, das Induzieren eines elektrischen Stroms in den mindestens einen magnetischen Elementen (3) durch Kontakt mit einer unteren Schiene (3') umfasst, derart, dass ein zu dem induzierten elektrischen Strom proportionales Magnetfeld erzeugt wird.

## Revendications

1. Bande transporteuse (2) dotée d'un système de contrôle d'allongement, dans laquelle ladite bande transporteuse (2) comprend une pluralité de pas dans laquelle au moins un élément magnétique (3) est logé dans la bande et inséré entre chaque pas adjacent dans une seule et même position, à une séparation ou distance (d) identique qui est égale à la distance entre deux pas adjacents de la bande transporteuse (2) ;
et **caractérisée en ce que** la bande transporteuse (2) comprend en outre :
des moyens de détection d'un allongement entre deux pas (1) de la bande transporteuse (2) ; et
des moyens configurés pour faire varier le champ magnétique généré par chacun des au moins un élément magnétique (3), ledit champ magnétique étant généré de sorte que le au moins un éléments magnétiques (3) situé entre des pas adjacents (1) de la bande transporteuse (2) sont attirés les uns vers les autres ; jusqu'à ce que l'allongement soit inférieur à un seuil préalablement établi.

2. Bande transporteuse dotée d'un système de contrôle d'allongement selon la revendication 1, dans laquelle l'au moins un éléments magnétiques (3) sont des électroaimants configurés pour générer un pôle positif et un autre pôle négatif qui, toujours placés et orientés dans la même position au sein de la bande transporteuse (2), génère un champ magnétique en relation avec l'allongement détecté entre des pas adjacents (1) de la bande transporteuse (2).

3. Bande transporteuse dotée d'un système de contrôle d'allongement selon la revendication 1, comprenant un système d'induction induisant, dans une manière sans contact, un champ magnétique dans l'au moins un éléments magnétiques (3).

4. Bande transporteuse dotée d'un système de contrôle d'allongement selon la revendication 1, comprenant un rail inférieur (3') induisant un courant électrique dans l'au moins un éléments magnétiques (3) configuré pour générer un champ magnétique proportionnel au courant électrique induit.

5. Procédé de contrôle d'allongement dans des bandes transporteuses, qui est réalisé dans une bande transporteuse dotée d'un système de contrôle d'allongement selon l'une quelconque des revendications 1 à 4 et comprenant les étapes consistant à :
insérer entre chaque pas adjacent le au moins un élément magnétique (3) dans la bande transporteuse (2), dans une seule et même position, à une séparation ou distance (d) identique qui est égale au pas (1) de la bande transporteuse (2) ;
détecter un allongement entre deux pas (1) de la bande transporteuse (2) ;
générer un champ magnétique dans l'au moins un éléments magnétiques (3) dans lequel ledit champ magnétique généré étant configuré pour attirer l'au moins un éléments magnétiques (3) entre des pas adjacents de la bande transporteuse (2) les uns vers les autres jusqu'à ce que l'allongement soit inférieur qu'un seuil préalablement établi.

6. Procédé de contrôle selon la revendication 5, qui comprend placer et orienter, toujours dans la même position à l'intérieur de la bande transporteuse (2), l'au moins un éléments magnétiques (3) configuré pour générer un pôle positif et un autre pôle négatif qui induisent un champ magnétique en relation avec l'allongement détecté entre des pas adjacents (1) de la bande transporteuse (2).

7. Procédé de contrôle selon la revendication 5, qui comprend l'induction d'un courant électrique dans ledit au moins un éléments magnétiques (3) par contact avec un rail inférieur (3'), de sorte qu'un champ magnétique proportionnel au courant électrique induit est généré.
